# EUROPEAN PATENT APPLICATION

(11) **EP 1 832 612 A1**
(43) Date of publication of application: **12.09.2007**
(21) Application number: 07004771.7
(22) Date of filing: 08.03.2007
(51) Int. Cl.: C08F 226/08

(54) **Water based polymerization for linear polyvinylpyridine**

(30) Priority: 08.03.2006 US 370334
(71) Applicant: Vertellus Specialties Inc., Indianapolis IN 46024 (US)
(72) Inventor: Murugan, Ramlah, Indianapolis IN 46260 (US); Grendze, Martin, Indianapolis IN 46234 (US)
(74) Representative: Elsy, David

(57) **Abstract**

The present application relates to processes for producing linear polyvinylpyridines without the use of hazardous solvents, and in a manner that allows control over the rate of heat generated by the reaction and the temperature of the reactor vessel. The processes involve the use of an initiator to initiate polymerization of vinylpyridine monomers in water. Processes of the invention provide good reaction rates and conversions, and are particularly advantageous in achieving control of the molecular weights of the final product polymers.

## Description

### BACKGROUND

The present invention resides generally in the field of polymers of vinylpyridines. More particularly, the present invention relates to solution polymerizations of vinylpyridine monomers to prepare linear vinylpyridine polymers.

As further background, linear polyvinylpyridines and functionalized derivatives and copolymers thereof are useful in a wide variety of applications. For example, conductive polymers prepared from linear polyvinylpyridine and molecular iodine have been utilized as cathode materials in small solid-state batteries in which long life under low current strain is required, such as batteries used in implantable cardiac pacemakers. See, U.S. Pat. Nos. 3,660,163 and 3,773,557. Quaternary salts of polyvinylpyridines (e.g. poly(1-alkylvinylpyridinium halides)) have proven to be good negative electron beam resists for microlithography. See, K. I. Lee et al., Proc. SPIE Int. Soc. Opt. Eng., 333, 15 (1982).

Polyvinylpyridines have been used extensively in the repographic and lithographic fields because of the combination of properties ranging from adhesive to electrical properties. See, U.S. Pat. Nos. 4,041,204; 3,942,988; Ger. Offen. 3,040,047; Japan KOKAI 76 30,741; U.S. Pat. No. 4,032,339; Ger. Offen. 2,701,144; and Japan KOKAI 75 124,648. Polyvinylpyridines have also found applications in the film and photographic area. For example, solutions of polyvinylpyridine or their quaternary salts form thin films that protect the image surface of instant film prints. See, U.S. Pat. Nos. 2,874,045; 2,830,900; and 3,459,580.

In addition, Polyvinylpyridines are compatible with synthetic and natural polymers such as polyolefins (including polypropylene), polyethylene terephthalate, nylon, and cellulose, and find applications in plastics, alloys and blends. Fibers incorporating polyvinylpyridines show excellent dyeing intensity and are color fast. See, e.g. U.S. Pat. No. 3,361,843. Further, polyvinylpyridiniumphosphate imparts permanent fire retardancy to cellulose textiles. See U.S. Pat. No. 2,992,942. Therefore, polyvinylpyridines find uses in the textile industry to impart color fastness to fibers, as well as imparting fire retardant properties to the fibers.

Polyvinylpyridines further find utility in the treatment of bleached Kraft paper to increase titanium dioxide retention in pulp slurries, and is used in electroplating applications-particularly in quaternary salts. Polyvinylpyridines are further used as corrosion inhibitors for metals including iron, aluminum, copper, brass, magnesium and solders, and as polymerization inhibitors in Li/TiS₂ current-producing electrochemical cells. Likewise, polyvinylpyridines find use as emulsion stabilizers and dispersing agents (in particular acid salt and quaternary salt forms), as flocculating agents (particularly acid salt and quaternary ethylhalide forms), in ion exchange membrane preparation and many other applications. These and other uses for linear polyvinylpyridines are reviewed extensively in product literature available from Reilly Industries, Inc., Indianapolis, Ind. U.S.A., entitled "Linear Polyvinylpyridine: Properties and Applications" (1983 and 1989), to which reference can be made for additional information.

As to their preparation, linear polyvinylpyridines have been prepared by various general polymerization techniques. These have included radiation initiated, Ziegler-Natta initiated, free radical initiated and anionic initiated polymerizations. Radiation initiated polymerizations have usually been used for the preparation of graft copolymers. Ziegler-Natta initiated systems usually do not work well for the vinylpyridine systems.

Free radical (addition) polymerizations of vinylpyridines are common in the literature. Generally, there are three differing types of free radical catalyzed polymerizations, those being solution, emulsion and bulk. They are carried out more commonly using initiators such as benzoyl peroxide, cummene hydroperoxide and azobis (isobutyronitrile). Bulk polymerization of vinylpyridine catalyzed by benzoyl peroxide, hydrogen peroxide and certain other per compounds has been reported in French Pat. 849,126 and CA:35:6358⁶ (1941). Suspension polymerization of vinylpyridine catalyzed by water-soluble free radical initiator in the presence of small particles of solid polyolefin has also been reported in U.S. Pat. Nos. 3,828,016; 3,947,526; and 4,824,910. Generally speaking, however, in known free radical-catalyzed processes it has often proven highly difficult to control the molecular weight ("Mw")of the vinylpyridine polymers using free radical initiators.

Other processes such as anionic low temperature (about -78° C) homopolymerization of 4-vinylpyridine initiated with certain monofunctional alkalai-metal based carbanionic species have been studied in tetrahydrofuran ("THF") and other solvent mixtures as reported by S. K. Varshney et al. in Macromolecules (26) 701 (1993). A significant disadvantage of this and other anionic polymerizations (see, e.g., G. E. Molan et al., J. Polym. Sci. Part A-1, 4, 2336 (1966)) is the requirement of extreme dry conditions for the polymerizations which are directly related to the Mw control of the product polymer. Thus, historically, anionic polymerizations of vinylpyridines have been somewhat difficult to control, making it complicated to obtain linear polyvinylpyridines of desired molecular weights, especially lower molecular weight polyvinylpyridines.

In addition to conventional polymerization methods, vinylpyridines have been reported to spontaneously polymerize upon salt formation with acids or alkyl halides. J. C. Salamone et al. Polymer Letters, 9, 13 (1971); I. Mielke et al., Macromol. Chem. 153, 307 (1972); J. C. Salamone et al, Macromolecules, 6, 475 (1973); J. C. Salamone et al., Polymer Letters, 15, 487 (1977). Such spontaneous polymerizations are relatively disadvantageous because they give rise to a mixture of the normal linear polyvinylpyridines and ionene type polymers.

U.S. Patent Nos. 5,824;756 and 5,403,906, assigned to Reilly Industries, Inc., ("the Reilly Patents," both hereby incorporated by reference in their entirety) address improved methods for polymerizing vinylpyridine monomers so as to achieve the production of linear polyvinylpyridines of controlled molecular weight. However, the processes disclosed in the Reilly patents are performed using batch polymerization, where all ingredients are combined in a single container, and then conditions are applied to perform the initial reaction. Batch polymerization is disfavored in the industry due to inherent safety concerns. Specifically, batch polymerization is self-accelerating, and the exothermic nature of the polymerization, combined with self-acceleration can produce a safety hazard. Therefore, it would be appreciated in the art to provide a method for producing polyvinylpyridines in a manner in which the molecular weight could be controlled.

Further, previous methods of producing polyvinylpyridines involve the use of solvents, many of which are considered hazardous solvents, and must be recovered or specially transported after they have been used, adding cost to the production.. While the Reilly Patents disclose the use of water-soluble solvents, it would be appreciated in the art to provide a process that requires less or no hazardous solvents to be used in the production of polyvinylpyridines. The present application includes processes addressing these needs.

### SUMMARY

The present application discusses novel processes for producing linear poyvinylpyridines. One such process for producing a linear polyvinylpyridine comprises the steps of selecting one or more vinylpyridine monomers, selecting an initiator, providing a reactor containing a solvent comprising water, and not including a hazardous solvent, and combining the one or more vinylpyridine monomers and the initiator with the water in the reactor. Optionally, the process described above can include heating the water to a range of about 30° C to about 100° C. In addition, the above process can be performed by selecting 2-vinylpyridine, 4-vinylpyridine, or a mixture of the two as the one or more vinylpyridine monomers. According to one embodiment, the resultant polyvinylpyridine has a Mw of about 30,000 or less. Further, the initiator may be selected from a group consisting of hydrogen peroxide, tert-butyl hydroperoxide, potassium persulfate, 2,2'azobix(2-methyproprionamidine) dihydrochloride, or other water soluble initiator. Additionally, an additional step of refluxing the combined one or more monomers, initiator, and water may be performed in this process. One option included refluxing the combination for about 0.5 to about 10 hours. Finally, an optional step includes recovering the linear polyvinylpyridine.

Another process according to the present application includes the steps of selecting one or more vinylpyridine monomers, selecting an initiator, providing a reactor containing a solution comprising water but not containing a hazardous solvent, heating the solution to a temperature between about 30° C to about 100° C, and adding the initiator and one or more vinylpyridine monomers to the solvent at a consistent rate. Optionally, the process can be performed by selecting 2-vinylpyridine, 4-vinylpyridine, or a mixture of the two as the one or more vinylpyridine monomers. According to one embodiment, the resultant polyvinylpyridine has a Mw of about 30,000 or less. Further, one embodiment of the process involves the additional step of maintaining the temperature of the reactor vessel and its contents at or below a selected temperature. For example, the reactor temperature may be maintained below 100° C. Furthermore, the process may be performed by the controlled addition of one or more vinylpyridine monomers to the reactor.

Another process according to the present application includes the steps of selecting one or more vinylpyridine monomers; selecting an initiator, providing a reactor containing a solvent comprising essentially of water, heating the solvent to a temperature between about 30° C to about 100° C, adding the initiator and one or more vinylpyridine monomers to the solvent at a consistent rate, maintaining the temperature of a solution within the reactor at a preselected temperature during a period of time when the initiator and one or more vinylpyridine monomers are added to the solvent, and refluxing the resultant solution for a preselected time. According to one embodiment, the preselected temperature may be in a range of about 30° C to about 100° C, but any temperature may be preselected. Additionally, according one embodiment, refluxing may occur from about 0.5 to about 10 hours, although refluxing can occur for any selected length of time. In addition, one optional performance of the process described above includes the use of 2-vinylpyridine, 4-vinylpyridine, or a mixture of the two as the one or more vinylpyridine monomers. Finally, the process may be used to produce a polyvinylpyridine polymer that has a Mw of 30,000 or less, although polymers of any Mw can be created using this process.

### DESCRIPTION

The present application relates to a unique process for preparing linear polyvinylpyridines while controlling their molecular weight (Mw), doing so with fewer or no hazardous solvents. The process involves reacting one or more vinylpyridine monomers in water in the presence of a polymerization catalyst. Hydrogen peroxide, tert-butyl hydroperoxide, potassium persulfate, or other water-soluble initiators are used to polymerize the monomer or monomers under semi-batch (also referred to in the art as "feed-starved" or "monomer-starved") conditions to form a linear polyvinylpyridine polymer.

In one embodiment, vinylpyridine monomers for use in the invention are 2- and 4-vinylpyridine monomers. Additionally, other vinylpyridine monomers, for example 3-vinylpyridine monomers, are suitable. The vinylpyridine monomer used in the invention can be obtained commercially or by techniques known to the art and literature, and can be non-substituted or substituted (i.e. on its pyridine ring) with one, two, three or four groups which do not detrimentally interfere with the polymerization reaction, especially lower alkyl groups such as C₁ to C₆ alkyls (i.e. methyl, ethyl, propyl, butyl, heptyl and hexyl) substituents. *See, e.g.,* Decout, J. L. et al., J. Prelim. Sci. Prelim. Chem,. Ed., 18, 2391 (1980). Vinylpyridine monomers such as non-substituted 2- and 4-vinylpyridine monomers, for example as can be obtained from Reilly Industries, Inc., of Indianapolis, Ind., U.S.A. While not necessary for the present invention, it is preferred that the vinylpyridine monomer(s) used be of high purity, for example 90% to 95% or more pure.

In one embodiment, linear polyvinylpyridines produced in accordance with the invention comprise repeating units of the formula: 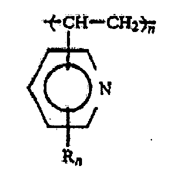 wherein n is 0 to 4 and R is a C₁ to C₆ alkyl group, and in which each R group may be different from one another, some R groups may be the same, or all R groups may be identical.

According to one embodiment, batch polymerization of polyvinylpyridines typically used in the art to produce polyvinylpyridines is replaced with a semi-batch polymerization process. In the semi-batch polymerization process, reactants (vinylpyridine monomers and an initiator) are added incrementally to the reactor, which contains water. *See, generally,* Principles of Polymerization, George Odian (Wiley-Interscience, 1981); Encyclopedia of Polymer Science and Engineering (Vol. 12, 2nd ed.) 515-520; Schork, Despande, and Lefew, "Control of Polymerization Reactors" (Marcel Dekker, 1993); Teymour "Dynamics of Semibatch Polymerization Reactors: II. Pilot Plant Study" AICHE J.43, 157 (1997). Incremental addition of the reactants allows improved control over the reaction by preventing thermally induced runaway reactions that may occur in a batch process. With a semi-batch polymerization process, the rate of the addition of the reactants can be limited to control the rate of heat generated from reaction and thereby enable control of the temperature of the reactor.

While controlling the rate of addition of reactant allows the reaction to be controlled and increases safety, it also has the unexpected result of allowing polymerization to occur without the use of hazardous solvents. It has been found that use of a semi-batch process for producing polyvinylpyridines can occur using only water in the reactor as the solvent. This result is counterintuitive, as performing the polymerization of polyvinylpyridines in a batch mode with only water as a solvent results in slower rates of polymerzation, lower conversions, and yields a viscous, tacky polymer with a low molecular weight and bimodal distribution, which is thereby commercially impracticable.

Therefore, according to one embodiment of the present invention, the monomer and initiator are added to a reactor containing heated water in a semi-batch process. Optionally, the contents of the reactor are stirred while the reaction takes place. The rate of addition of the reactants to the reactor are controlled, and can be accomplished by utilizing methods known in the art, such as metering pumps to inject the reactants into the reactor at a specified rate.

The amount of initiator to use to obtain the desired product molecular weight will depend upon many factors including, for example, the relative amounts of reactant (i.e. the concentration level of the reaction), and given the teachings herein will be readily determinable by the ordinarily skilled artisan. As expected, reactions run with equivalent amounts of initiator at higher concentrations or higher rates of injection when compared to the monomer injection rate at the same concentration will generally provide polymers of lower molecular weights. Conversely, reactions run with equivalent amounts of initiator at lower concentrations or with the injection rate of the initiator at the same concentration being injected more slowly in relation to injection of the monomer will provide polymers of higher molecular weight.

The following examples provide a comparison of some exemplary embodiments of the present invention as compared to methods previously used.

### Example 1: Batch Method (Control)

As described in U.S. Patent 5,824, 756, a control sample was produced by using the following method: A 1000 mL round-bottomed flask was charged with de-ionized water (33 g), 1-propanol (80 g), 4-vinylpyridine (100.0 g, 0.951 mol), and 35% hydrogen peroxide (32 g, 0.33 mol) and heated to reflux temperature for 12 hours.

### Example 2: Semi-Batch Method Using Water Soluble Solvent

As an exemplary embodiment of the semi-batch method utilizing the water-soluble solvents discussed in the Reilly Patents, a 1000 mL round-bottomed flask was charged with de-ionized water (33 g) and 1-propanol (8.0 g). The contents of the flask were heated to reflux temperature. One syringe pump was used to add 4-vinylpyridine (100 g, .95 mol) to the reactor and another pump was used to add 35% hydrogen peroxide (32 g, 0.33 mol) to the reactor. Both reactants were added simultaneously, and at constant rates such that the 4-vinylpyridine and hydrogen peroxide additions started and finished at about the same time. In total, the addition occurred over about a two (2) hour period. The reaction was held at about 100° C for 6 hours and then cooled to room temperature. Analysis of the resultant product showed that monomer conversion was about 91%, with the resultant polyvinylpyridine Mw at about 7530 with a polydispersity of about 1.35 Mw/Mn (as discussed further below).

### Example 3: Semi-Batch Process, Water as the Only Solvent

As an exemplary embodiment of the application utilizing the semi-batch method with the solvent comprising only water, a 1000 mL round-bottomed flask was charged with de-ionized water (114 g) and heated to about 90-95° C. One syringe pump was used to add 4-vinylpyridine (100 g, 0.95 mol) to the reactor and another pump was used to add 35% hydrogen (32 g, 0.33 mol) to the reactor. Both reactants were added simultaneously, and at constant rates such that the 4-vinylpyridine and hydrogen peroxide additions started and finished at about the same time. In total, the addition occurred over about a two (2) hour period. The reaction was held at about 100° C for 6 hours and then cooled to room temperature. Analysis of the two-phase polymer-water mixture showed 99% conversion of the monomer, with the resultant polyvinylpyridine Mw at about 7360 and the Mw/Mn at about 1.70.

### Example 4: Semi-Batch, Water Only Solvent, Higher Polymer Concentration

Another exemplary embodiment of the application utilizing the semi-batch method with the solvent comprising only water, a 1000 mL round-bottomed flask was charged with de-ionized water (37 g) and heated to about 90-95° C. One syringe pump was used to add 4-vinylpyridine (100 g, 0.95 mol) to the reactor and another pump was used to add 35% hydrogen peroxide (32 g, 0.33 mol) to the reactor. Both reactants were added simultaneously, and at constant rates such that the 4-vinylpyridine and hydrogen peroxide additions started and finished at about the same time. In total, the addition occurred over about a two (2) hour period. The reaction was held at about 100° C for 6 hours and then cooled to room temperature. Analysis of the two-phase polymer-water mixture showed 90% conversion of the monomer, with the resultant polyvinylpyridine Mw at about 7220 and the Mw/Mn at about 1.75.

### Example 5: Semi-Batch, Water Only Solvent, Changed Initiator/Monomer Concentration

As a final exemplary embodiment of the application utilizing the semi-batch method with the solvent comprising only water, a 1000 mL round-bottomed flask was charged with de-ionized water (123 g) and heated to about 90-95° C. One syringe pump was used to add 4-vinylpyridine (100 g, 0.95 mol) to the reactor and another pump was used to add 35% hydrogen peroxide (11 g, 0.11 mol) to the reactor. Both reactants were added simultaneously, and at constant rates such that the 4-vinylpyridine and hydrogen peroxide additions started and finished at about the same time. In total, the addition of the reactants occurred over about a two. (2) hour period. The reaction was held at about 100° C for 6 hours and then cooled to room temperature. Analysis of the two-phase polymer-water mixture showed 91% conversion of the monomer, with the resultant polyvinylpyridine Mw at about 10,210 and the Mw/Mn at about 2.05.

It will be appreciated that the above exemplary embodiments are intended to give an example of the embodied processes described herein, and are not intended to limit the use of the processes disclosed to any particular initiator or monomer. As can be seen in comparing Examples 1 and 2 to Examples 3-5, the processes embodied herein are as efficient or more efficient than the batch process utilizing a solvent.

According to one aspect of this application, the parameters used in the process are controlled to provide linear polyvinylpyridines having polystyrene equivalent Mw up to about 100,000, more preferably up to about 50,000, and most preferably up to about 30,000. In these processes, the molar ratio of initiator to vinylpyridine monomer employed will usually be about 1:1 to about 1:1000. More preferably, this ratio will be about 1:1 to about 1:100, and most preferably about 1:1 to about 1:10. Likewise, in one embodiment, these processes are conducted at concentration levels wherein the ratio of vinylpyridine monomer weight to vinylpyridine monomer weight + water ranges from about 1:20 to about 1:2.

While alcohol and water have been used in various proportions for batch processes, the present application relates to a process wherein no alcohol is used, and water is the sole solvent for the polymerization. As discussed below, the water to vinylpyridine monomer(s) a ratio will be readily determined by those practiced in the area.

In another embodiment, a process for producing polyvinylpyridines include functionalizing the polyvinylpyridines. Such functionalized polyvinylpyridines include acid salt forms, N-oxide forms, quaternary salt forms, other functional groups. Producing functionalized polyvinylpyridines according to one aspect of this application involves utilizing a free-base form linear polyvinylpyridine polymer produced by any one of the processes discussed herein, and converting the free-base polyvinylpyridine to a functionalized polyvinylpyridine by conventional techniques. Thus, it can be seen that the processes according to this application create a polyvinylpyridine operable to be functionalized according to conventional techniques.

According to certain embodiments, processes according to this application be conducted at temperatures sufficient to achieve the desired polymerization of the vinylpyridine monomer(s) selected. One of ordinary skill in the art will appreciate that the temperature of the polymerizations will vary with many factors including, as noted, the particular monomer or monomers employed. While polymerization occurs at temperatures as low as 30°C, polymerization occurs rapidly at temperatures near 100°C. As noted above, in one embodiment, the polyvinylpyridines and initiator are added to heated water in a semi-batch method.

The polymerization reaction will be continued for sufficient period of time to achieve substantial conversion of the vinylpyridine monomer(s) to the polymer product. The duration of the polymerization reaction required to achieve the conversion will depend upon several factors including the amount of initiator, the amount of water added, and the reaction temperature. Typically, however, the polymerization process will be carried out over periods of up to about 24 hours, more typically about 1/2 to about 10 hours.

After the polymerization reaction is completed, the linear polyvinylpyridine polymer can be conventionally isolated. The polymer can then be filtered. The use of suitable recovery and isolation techniques for the formed polymer is within the purview of one of ordinary skill in the art.

The polymer is preferably recovered in substantially pure form (i.e. substantially free from other components of the reaction medium such as unreacted monomer, water or initiator/catalyst residues). Polymer compositions having narrow molecular weight distributions are also favored. According to one embodiment polymer compositions produced by the processes discussed above will have polydispersities. Polydispersities refer to the weight average molecular weight of the polymer divided by the number average molecular weight of the polymer, usually expressed in terms of Mw/Mn. The polydispersities according to one embodiment occur in the range of about 1 to 10 Mw/Mn and more preferably in the range of about 1 to 3 Mw/Mn.

Furthermore, according to another embodiment isolated linear polyvinylpyridines are conventionally used and derivatized. As discussed above, functionalized linear polyvinylpyridine polymers are readily be obtained from linear polyvinylpyridine polymers made from the above methods using conventional techniques. As used herein the term functionalized includes both partially and substantially fully functionalized polymers. In most cases, linear polyvinylpyridine polymers are desired in which at least about 10%, more preferably at least about 50% of the pendant pyridine groups, are functionalized. Representative functional forms include acid salts forms, such as those prepared from strong mineral acids such as sulfuric acid or from hydrohalides such as hydrochloric acid. Quaternary salts can also be prepared by reacting the linear polyvinylpyridines with halogenated organics such as alkyl halides, usually C₁ to about C₂₀ alkyl halides. The linear polyvinylpyridines can be converted to their N-oxide forms by conventional procedures, for instance by reaction with hydrogen peroxide in the presence of acetic acid. *See, e.g.,* the above-cited publication entitled "Linear Polyvinylpyridines: Properties and Applications" by Reilly Industries, Inc. According to one embodiment, linear polyvinylpyridines are used to form complexes with many metals or metal ligands, such as Rh₄(CO)₁₂, Co₄(CO)₁₂, Co₂(CO)₈ or Ru(II) or Rh(I).

To promote a further understanding of the present invention and its features and advantages, the following specific examples are provided. It is to be understood that these examples are illustrative and not limiting in nature. Unless indicated otherwise, Mw's set forth herein are polystyrene equivalent Mw's.

All publications cited herein are indicative of the level of ordinary skill in the art, and each is hereby incorporated by reference in its entirety as if individually incorporated by reference and fully set forth.

While the invention has been described in detail in the foregoing description, the same is to be considered as illustrative and not restrictive in character, it being understood that only the preferred embodiments have been described and that all changes and modifications that come within the spirit of the invention are desired to be protected. Although the present invention has been described in considerable detail with reference to certain preferred versions thereof, other versions are possible. Therefore, the spirit and scope of the appended claims should not be limited to the description of the preferred versions contained herein.

## Claims

1. A process for producing a linear polyvinylpyridine, comprising the steps of:
a. selecting one or more vinylpyridine monomers;
b. selecting an initiator;
c. providing a reactor containing water; and
d. combining the one or more vinylpyridine monomers and the initiator with the water in the reactor.

2. The process of claim 1, wherein the water is heated to a range of about 30° C to about 100°.

3. The process of claim 1, wherein the vinylpyridine monomer is 2-vinylpyridine, 4-vinylpyridine, or a mixture thereof.

4. The process of claim 1, wherein the resultant polyvinylpyridine polymer has a Mw of about 30,000 or less.

5. The process of claim 1, wherein the initiator is selected from the group consisting of hydrogen peroxide, tert-butyl hydrogen peroxide, potassium persulfate, 2,2'azobix(2-methyproprionamidine) dihydrochloride, or other water soluble initiator.

6. The process of claim 1, comprising the additional step of refluxing the combined one or more monomers, initiator, and water.

7. The process of claim 6, wherein the step of refluxing occurs for about 0.5 to about 10 hours.

8. The process of claim 7, further comprising the step of recovering said linear polyvinylpyridine.

9. A process for producing a linear polyvinylpyridine, comprising:
a. selecting one or more vinylpyridine monomers;
b. selecting an initiator;
c. providing a reactor containing a solvent comprising water, but not containing a hazardous solvent;
d. heating the solvent to a temperature between about 30° C and 100° C; and
e. adding the initiator and one or more vinylpyridine monomers to the solvent at specified rates.

10. The process of claim 9, wherein the vinylpyridine monomer is 2-vinylpyridine, 4-vinylpyridine, or a mixture thereof.

11. The process of claim 10, wherein the resultant polyvinylpyridine polymer has a Mw of 30,000 or less.

12. The process of claim 9, including the additional step of maintaining a solution in the reactor below a selected temperature.

13. The process of claim 11, wherein the selected temperature is about 100° C.

14. The process of claim 9, wherein the initiator and one or more vinylpyridine monomers are added to the solvent utilizing a metering pump.

15. A process for producing a linear polyvinylpyridine, comprising the steps of:
a. selecting one or more vinylpyridine monomers;
b. selecting an initiator comprising hydrogen peroxide;
c. providing a reactor containing a solvent consisting essentially of water;
d. heating the solvent to a temperature between about 30° C and 100° C;
e. adding the initiator and one or more vinylpyridine monomers to the solvent at a constant rate;
f. maintaining the temperature of a solution within the reactor at a preselected temperature during a period of time when the initiator and one or more vinylpyridine monomers are added to the solvent; and
g. refluxing the resultant solution for a preselected time.

16. The process of claim 15, wherein the preselected temperature is about 30° C to about 100° C.

17. The process of claim 15, wherein the step of refluxing occurs for about 0.5 to about 10 hours.

18. The process of claim 15, wherein the vinylpyridine monomer is 2-vinylpyridine, 4-vinylpyridine, or a mixture thereof.

19. The process of claim 15, wherein the polyvinylpyridine polymer has a Mw of 30,000 or less.
